# EUROPEAN PATENT APPLICATION

(11) **EP 0 826 314 A1**
(43) Date of publication of application: **04.03.1998**
(21) Application number: 96202383.4
(22) Date of filing: 28.08.1996
(51) Int. Cl.: A23L 1/325, A23L 1/48, A23L 1/39

(54) **Frozen culinary block**

(71) Applicant: SOCIETE DES PRODUITS NESTLE S.A., 1800 Vevey (CH)
(72) Inventor: Hansson, Nils Erik, 267 36 Bjuv (SE)

(57) **Abstract**

The present invention relates to a frozen culinary block which substantially retains its shape when heated, said block comprises raw fish, a flavouring sauce or vegetables, and a cold mixed sauce which comprises cold water soluble starch and egg white. The invention also relates to a method for making such shape retaining culinary blocks.

## Description

The present invention relates to a frozen culinary block which substantially retains its shape when heated, said block comprises raw fish, a flavouring sauce and/or vegetables, and a cold mixed sauce which comprises starch and egg white. The invention also relates to methods for making such frozen culinary blocks.

Battered frozen fish blocks are a well known food product. Traditionally this product-comprises almost 100% raw fish fillets and/or raw minced fish, which fish material is frozen into blocks. For example, the blocks are produced from 70 to 80 % fillets and 20 to 30 % minced raw fish material. Depending on the size of the block it may, while being in frozen condition, be cut into smaller consumer portions or blocks. The blocks are coated with batter and bread crumb coating and may, before having been frozen, be subjected to a pre-frying of the outer surface while the core of the block remains under 0°C during the frying. In the processing of the fish block it is important in order to obtain a quality fish product, that the fish material remains substantially raw and uncooked until prepared by the consumer i.e. so that the main part of the fish has only been subjected to one heating or cooking when it is served.

Due to the high content of fish material in the blocks, heating or cooking leaves the shape of the fish blocks substantially unchanged. The consumer preparing a battered fish block product will therefore expect that it retains its shape when being prepared for consumption.

The high content of fish in the above-described traditional fish blocks makes the product relatively expensive to manufacture. The fish content also gives the product a characteristic fish flavour which for many purposes is desirable. However, it is advantageous that the flavour of the product can be changed for variation of the product range or for adapting the flavour of the product to the taste of certain consumer groups e.g. age determined groups or groups of certain ethnic origins. Furthermore, it may be beneficial that vegetables can be added to the product for variation of flavour, colour and texture of the fish block.

Addition of flavours and vegetable pieces to the fish mass however, raises problems with regard to the shape retainability when the block is heated due to the lack of binding between the ingredients when the product is heated. In particular, difficulties are experienced when the flavoured sauces which are flowable at ambient temperature are flowable are added. Such sauces may e.g. be tomato purée, sweet and sour sauce, ketchup-chili sauces etc.

There is therefore a need for a frozen fish block product which can be produced at a lower cost than the above-discussed frozen battered fish block, which leaves room for a variation in flavours, which allows the addition of other food products such as vegetables, which comprises a substantial amount of fish material which is raw, and which, when subjected to heating, frying or cooking substantially retains its block shape.

According to the invention we have provided a frozen fish block which is aimed at meeting the above needs and a method for making said frozen fish block. In addition, an improved product is provided which retains moisture within the block when the block is heated.

In a first aspect, the invention relates to a method for making a frozen culinary block which substantially retains its shape upon heating, said method comprising the steps of
providing raw fish, a flavouring sauce flowable at ambient temperature, a cold mixed sauce comprising cold water soluble starch and egg white,
mixing the raw fish, flavouring sauce, and cold mixed sauce, and
freezing the mixture into a block or blocks.

The raw fish may be fillets and/or minced fish material. When fillets are used they are sliced to give a better distribution of the fish meat within the block. The fish used may be of any suitable kind e.g. cod, hake, haddock, flake, salmon etc. The amount of fish meat used can be varied depending on the desired quality of the block product. However, it is preferred that the raw fish is 30 to 70 %, preferably 55 to 65 %, by weight of the ingredients in the recipe.

The flavouring sauce is flowable or pumpable at ambient temperature. Example of viscosity values for the flavouring sauce is from 6 to 18° Bostwick during 1 minute registration. Sauces which advantageously may be used are: tomato purée, sweet and sour sauce, ketchup-chili sauces etc. Suitable sweet and sour sauce has a viscosity of 7 to 15° Bostwick during 1 minute registration, and a suitable tomato based sauce has a viscosity of 16 to 17° Bostwick during 1 minute registration. In accordance with the invention the flavouring sauce may be 15 to 30 % by weight of the ingredients in the recipe.

The cold mixed sauce comprising cold water soluble starch and egg white. The egg white has been found to form a firm gel structure already at about +70°C and this has been found to be a beneficial property as +70°C is also the optimal temperature of cooking or pan frying of fish of the above-described type. Cheese is used in combination with egg white when a cheese flavour is wanted. Egg white may be fresh egg white. However, for industrial purposes the egg white is advantageously egg white powder. The cold mixed sauce of the type discussed above is often referred to as a white sauce or a béchamel sauce.

The starch is cold water soluble. It is preferably able to absorb moisture from about +60°C and is added in an amount sufficient to absorb moisture coming from fish and vegetables during the cooking preparation of the block for consumption, see the example below. The starch thus provides an improvement over the prior art fish blocks described above. This is an improvement which allows for a better preparation of the product as the product tends to fry better and crispier as opposed to a more cooked product which, when cooked may be less crispy as a result of moisture released in the frying pan. Furthermore, a reduction of squirt resulting from moisture being released into the hot oil is obtained. At the temperature involved in the preparation of the block (heating to about +70°C) the starch does not form a gel but rather a sticky composition.

Preferably the cold mixed sauce may further comprise milk, vegetable oil, grated cheese, and spices. The ingredients are mixed with a minimum of water but the amount will depend on the recipe used. However, the amount added should be adjusted so that a product of high viscosity is obtained, which product is capable of absorbing moisture in the pan frying process. It is preferred that, when cheese and vegetable oil are part of the recipe, they are added after the water binding structure of the starch and protein has been developed.

The development of the optimal viscosity of the starch, the cold mixed sauce is mixed in a high speed mixer. For example, an industrial kitchen mixer with a wire whipping tool operating at 80 to 200 revolutions per minute is used. The higher speed being used at the beginning of the whipping.

Advantageously, the cold mixed sauce, the flavoured sauce and any spices are first mixed. If vegetables are in the recipe they are preferably sliced or milled and added to the mixture and mixed with it so as to obtain a proper distribution of the ingredients before the raw fish is subsequently added. When the raw fish is added to the mixture it should only be mixed gently as the fish fillets are sensitive to mechanical stress.

For industrial purposes the final mixture is conveniently dosed automatically into block cartons and frozen e.g. in plate freezers. The block product is preferably a standardised 16.1/2 lb. weight with the dimensions 252 mm. x 480 mm. x 62 mm. This is a standard dimension used world-wide and all automatic handling on fish block sawing lines are designed to operate with that specification. This block is then cut into smaller blocks or portions while still frozen. For example the blocks are 18 or 36 grams blocks or sticks having respectively the dimensions of 10.2 mm x 20 mm x 84 mm and 10.2 mm x 40 mm x 84 mm.

The cut-out fish blocks or sticks may be coated with batter and turned in bread crumbs and then frozen. Alternatively, the coated blocks' or sticks' outer surfaces are subjected to a pre-frying while the centre of the blocks or sticks remain below 0°C. After the pre-frying the product is deep frozen.

Although the above discussion of the invention in particular relates to the method for providing culinary blocks which are suitable for being battered, it will be appreciated that the culinary blocks according to the invention may advantageously be used as part of other types of meals. Examples of such meals are: culinary blocks in a sauce and in gratin.

In another embodiment, the invention relates to a method for making a frozen culinary block which substantially retains its shape upon heating, said method comprising the steps of
providing raw fish, vegetable material, a cold mixed sauce comprising cold water soluble starch and egg white,
mixing the raw fish, vegetable material, and cold mixed sauce, and
freezing the mixture into a block or blocks.

According to this embodiment of the invention a substantial amount of vegetables e.g. chopped or milled may be added to the raw fish while the shape of the block is retained when the product is heated. The amount of vegetable may be up to 36 to 40% by weight of the total ingredients depending e.g. on the amount of spices added.

The invention also relates to a frozen culinary block comprising 30 to 70 % raw fish (by weight), 15 to 30 % (by weight) flavoured sauce which is flowable at ambient temperature, and cold mixed sauce comprising cold water soluble starch and egg white; and to a frozen culinary block comprising 30 to 70 % raw fish (by weight), vegetable material, and cold mixed sauce comprising cold water soluble starch and egg white. The culinary blocks may be coated with a batter and turned in bread crumbs. The frozen blocks may made according to the methods set out above.

Cheese flavours can be obtained by adding grated cheese or cheese powder. The cheese may replace part of the egg white of the cold mixed sauce.

The invention will now be discussed in further details with reference to the example below.

### EXAMPLE

In a preferred embodiment of the invention, the method for producing the culinary blocks may be conducted in the following way:

### COLD MIXED SAUCE (Béchamel sauce):

The sauce is mixed from ingredients which have been selected on the basis of their functional properties: The ingredients are: Starch, dried egg white, milk powder, cheese and/or vegetable oil, and water.

The béchamel sauce constitutes 10 to 15 % of the total recipe by weight. The béchamel sauce consists of (given in weight of the total béchamel sauce):
7-11 % cold water soluble starch,
14-18 % egg white powder,
about 3% milk powder,
about 30 % vegetable oil (the amount of milk powder and vegetable oil may be +/- 2%, however, the amount of the two components should be coordinated as the milk powder acts as an emulsifier for the oil).
58 to 62 % water (water is added in an amount sufficient to make the béchamel sauce pumpable).

In a preferred recipe, the béchamel sauce comprises about 7% cold water soluble starch, and about 16 % egg white powder.

The dried egg white is added due to its abilities to form a firm gel structure already at +70°C, which is the optimal final centre temperature in the final pan frying of the fish sticks for consumption. The cheese is added for obtaining the cheese flavour of the final product. The milk powder supports the gel forming and acts as an emulsifier for the vegetable oil added.

The starch is a cold water soluble, high viscosity starch, e.g. a rice starch from Remyrice™. A suitable rice starch is a starch of 400 to 500 Brabender Units. The starch is added in a high amount to have capacity enough to absorb the moisture drip water which is always produced by fish and vegetables during the final heating of the product from the frozen state. When exposed to this range of temperatures, starches do not however form a gel, but a sticky mass. The vegetable oil or the fat in the cheese will add a juiciness to the product.

The ingredients are mixed at a high speed into a minimum amount of water to get a product of high viscosity which is capable of absorbing extra water in the final pan frying. The starch does not develop its optimal viscosity without a heavy mixing operation. The oil should be added at the end of the mixing operation. Fat components added too early will block the water binding structures of the starch and protein thus reducing the development of a high viscosity and an homogenous sauce structure.

The "high speed mixer" used for the preparation of the sauce was an industrial kitchen machine equipped with a wire whipping tool and operating at 80-200 revolutions per minute, the higher speed being in the start-up phase of beating or whipping.

### MIXING OF THE CULINARY INGREDIENTS

The culinary ingredients are: flavouring sauce flowable at ambient temperature, spices, vegetables (preferably frozen chopped or sliced vegetables).

The béchamel sauce is premixed with the culinary ingredients in a low speed mixer to ensure a proper distribution of the ingredients before the raw fish material is added. A low speed mixer is used e.g. a horizontal mixer described below.

In the case of culinary blocks which are based solely on fish mince, this step is excluded as the mince is not sensitive to mechanical stress.

### THE RAW FISH

The raw fish material is added as the last step in a low speed horizontal mixer. The fillets are sliced into approximately 15mm. x 20mm. x 30mm. pieces in order to achieve a good distribution of the fish and other ingredients. If minced raw fish used it is minced to about 3 mm pieces.

The last mixing together with the very sensitive fillet raw material has to be very gentle to avoid unwanted losses in structural quality. A horizontal low speed mixer operating at a speed of 30 revolutions per minute for 3 minutes was found to be optimal.

### DOSING INTO BLOCK CARTONS

The mixture of all the ingredients are filled into 16.1/2 lb. standard block cartons by means of a standard automatic block filler. This gives a high capacity and low cost operation. The block filling and freezing should take place as soon as possible after the last mixing step to avoid marinating effects on the fillet parts, which results when the spices react with the fish causing discoloration and loss of fish flavour.

### FREEZING

The blocks are then frozen e.g. in a standard horizontal plate freezer. Preferably, the block products are of standardised 16.1/2 lb. weight with the dimensions 252 mm. x 480 mm. x 62 mm.

The blocks manufactured this way are cut into appropriate smaller blocks or sticks. They may be battered and pre-fried as discussed above or may be used in meals such as fish blocks in sauce or in gratin.

Examples of recipe (% by weight of the ingredients in the recipe):
a) 10 to 15 % Béchamel sauce as discussed above with cheese or vegetable oil or both.
b) 60 to 65 % raw minced cod,
c) 15 to 30% flavoured sauce such as tomato purée, sweet and sour sauce, or ketchup-chili sauce or a combination thereof.

Example of recipe:
1) 10 to 15 % Béchamel sauce as discussed above with cheese or vegetable oil or both,
2) 50 % raw cod of sliced fillets, and minced fish meat,
3) Frozen vegetables chopped e.g. onion, cabbage, carrots, mushrooms, red and green peppers, and spices.

## Claims

1. Method for making a frozen culinary block which substantially retains its shape upon heating, said method comprising the steps of
providing raw fish, a flavouring sauce flowable at ambient temperature, a cold mixed sauce comprising cold water soluble starch and egg white,
mixing the raw fish, flavouring sauce, and cold mixed sauce, and
freezing the mixture into a block or blocks.

2. A method according to claim 1, wherein the raw fish is 30 to 70 %, preferably 55 to 65 %, by weight of the ingredients in the recipe.

3. A method according to any of claims 1 and 2, wherein the flavouring sauce is 15 to 30 % by weight of the ingredients in the recipe.

4. A method according to any of claims 1 to 3, wherein the cold mixed sauce is 10 to 15 % by weight of the recipe.

5. A method according to any of claims 1 to 4, wherein the block or blocks is/are cut into smaller blocks.

6. A method according to any of claims 1 to 5, wherein the block or blocks is/are battered and the outer surface of the block or blocks pre-fried.

7. Method for making a frozen culinary block which substantially retains its shape upon heating, said method comprising the steps of
providing raw fish, vegetable material, a cold mixed sauce comprising cold water soluble starch and egg white,
mixing the raw fish, vegetable material, and cold mixed sauce, and
freezing the mixture into a block or blocks.

8. A frozen culinary block made by the method of any of claims 1 to 6, or claim 7.

9. A frozen culinary block comprising 30 to 70 % raw fish, 15 to 30 % flavoured sauce which is flowable at ambient temperature, and cold mixed sauce comprising cold water soluble starch and egg white.

10. A frozen culinary block comprising 30 to 70 % raw fish, vegetable material, and cold mixed sauce comprising cold water soluble starch and egg white.
